# EUROPÄISCHE PATENTSCHRIFT

(11) **EP 2 951 917 B1**
(45) Veröffentlichungstag und Bekanntmachung des Hinweises auf die Patenterteilung: **29.04.2020**
(21) Anmeldenummer: 14702010.1
(22) Anmeldetag: 30.01.2014
(51) Int. Cl.: H02M 7/5395, H02M 1/00

(54) **VERFAHREN ZUM FESTLEGEN VON ANSTEUERZEITDAUERN FÜR EINEN WECHSELRICHTER ZUR VERBESSERUNG DER STROMMESSUNG**
METHOD FOR STIPULATING ACTUATING PERIODS FOR AN INVERTER FOR IMPROVING THE CURRENT MEASUREMENT
PROCÉDÉ POUR FIXER LES DURÉES D'EXCITATION D'UN ONDULEUR POUR AMÉLIORER LA MESURE DU COURANT

(30) Priorität: 04.02.2013 DE 102013201733
(43) Veröffentlichungstag der Anmeldung: 09.12.2015
(73) Patentinhaber: Robert Bosch GmbH, 70442 Stuttgart (DE)
(72) Erfinder: FRICKER, David, F-67240 Oberhoffen Sur Moder (FR); KNECHT, Gerhard, 76473 Iffezheim (DE)
(86) Internationale Anmeldenummer: PCT/EP2014/051748
(87) Internationale Veröffentlichungsnummer: WO 2014/118252

(56) Entgegenhaltungen:
- DE-A1-102004 057 869
- BLAABJERG F ET AL: "SINGLE CURRENT SENSOR TECHNIQUE IN THE DC LINK OF THREE-PHASE PWM- VS INVERTERS: A REVIEW AND A NOVEL SOLUTION", IEEE TRANSACTIONS ON INDUSTRY APPLICATIONS, IEEE SERVICE CENTER, PISCATAWAY, NJ, US, Bd. 33, Nr. 5, 1. September 1997 (1997-09-01), Seiten 1241-1253, XP000739841, ISSN: 0093-9994, DOI: 10.1109/28.633802
- HAMID KHAN ET AL: "Altered PWM for DC link current translation to phase currents for electric drives", POWER ELECTRONICS AND MOTION CONTROL CONFERENCE (IPEMC), 2012 7TH INTERNATIONAL, IEEE, 2. Juni 2012 (2012-06-02), Seiten 2570-2576, XP032216091, DOI: 10.1109/IPEMC.2012.6259264 ISBN: 978-1-4577-2085-7

## Beschreibung

### Technisches Gebiet

Die Erfindung betrifft allgemein das Gebiet von Wechselrichtern, insbesondere Verfahren zum Betreiben von Wechselrichtern.

### Stand der Technik

Wechselrichter weisen in der Regel Halbleiterschaltelemente auf, die seriell zu Halbbrücken verschaltet sind. Die Halbleiterschaltelemente werden mit Hilfe von Kommutierungsmustern angesteuert, um Phasenspannungen bereitzustellen.

Aus der DE 10 2011 003 897 A1 ist es zur Messung der ausgegebenen Phasenströme eines mehrphasigen Wechselrichters bekannt, den auf einer der Zwischenkreisschienen fließenden Eingangsstrom in den Wechselrichter als einen von einer Halbbrücke ausgegebenen Phasenstrom zu einer Zeit zu betrachten, in der ausschließlich der Mittelabgriff dieser Halbbrücke mit der entsprechenden Zwischenkreisschiene verbunden ist.
Die Druckschrift Blaabjerg, F. et al. "Single Current Sensor Technique in the DC link of Three-Phase PWM- vs Inverters: A Review and a Novel Solution", IEEE Transactions on Industry Applications, IEEE Service Center, Piscataway, NJ, US, Bd. 33, Nr. 5, Seiten 1241-1253 offenbart ein Verfahren zum Festlegen von Ansteuerzeitdauern für einen Wechselrichter, wobei die Lage eine Ansteuerzeitdauern für eine Phase bezüglich einer Lage einer Ansteuerzeitdauer einer weiteren Phase verschoben wird.

Die Druckschrift Hamid Khan et al., "Altered PWM for DC link current translation to phase currents for electric drives", Power Electronics and Motion Control Conference, 2012, 7th International, IEEE, Seiten 2570 - 2576 offenbart ebenfalls ein Verfahren zum Festlegen von Ansteuerzeitdauern für einen Wechselrichter zur Ansteuerung einer elektrischen Maschine, wobei innerhalb einer Periode die Ansteuerzeitdauern für verschiedene Phasen zueinander versetzt werden, wenn diese deckungsgleich sind, oder innerhalb von mehreren aufeinanderfolgenden Perioden verändert werden.

Aus der Druckschrift DE 10 2004 057 869 A1 ist ein Verfahren zur Bestimmung mindestens eines Phasenstroms bei einer elektrischen Maschine mit einer Maschinensteuervorrichtung bekannt. Dazu schaltet die Maschinensteuervorrichtung mittels Betriebsschaltvorgängen Schaltanordnungen derart, dass zumindest zeitweise mindestens ein Phasenstrom zur Maschine geleitet wird, um den Betrieb der Maschine zu bewirken. Neben den den Betrieb der Maschine bewirkenden Betriebsschaltvorgängen wird mindestens ein weiterer der Bestimmung des Phasenstroms dienender Messschaltvorgang mittels mindestens einer der Schaltanordnungen durchgeführt.

Es ist Aufgabe, Ansteuerzeitdauern zum Ansteuern eines Wechselrichters in einer Weise festzulegen, so dass Phasenströme mit verbesserter Genauigkeit ermittelt werden können.

### Offenbarung der Erfindung

Diese Aufgabe wird durch das Verfahren zum Festlegen von Ansteuerzeitdauern für einen Wechselrichter gemäß Anspruch 1 sowie ein Verfahren zum Messen eines Phasenstroms eines mehrphasigen Wechselstroms nach Anspruch 3 und eine die Verfahren durchführende Vorrichtung nach Anspruch 5 gelöst.

Bevorzugte Ausgestaltungen sind in den abhängigen Ansprüchen angegeben.

Gemäß einem ersten Aspekt ist ein Verfahren zum Festlegen von Ansteuerzeitdauern für einen Wechselrichter mit wenigstens zwei Halbbrücken aus zwei über einen Mittelabgriff miteinander verbundenen Halbbrückenschaltern, an deren Anschlüssen gegenüber des Mittelabgriffs eine Spannung angelegt ist angegeben, wobei in jeder Halbbrücke ein erster der Halbbrückenschalter mit einer ersten Ansteuerzeitdauer der Ansteuerzeitdauern und der zweite der Halbbrückenschalter mit einer zweiten Ansteuerzeitdauer der Ansteuerzeitdauern im Rahmen einer Pulsweitenmodulation ansteuerbar ist. Das angegebene Verfahren umfasst die Schritte Bestimmen der Ansteuerzeitdauern für beide Halbbrückenschalter beider Halbbrücken während einer Periode der Pulsweitenmodulation und Verschieben der ersten Ansteuerzeitdauer der ersten Halbbrücke gegenüber der zweiten Ansteuerzeitdauer in der ersten Halbbrücke, wenn innerhalb der Periode der Pulsweitenmodulation die erste Ansteuerzeitdauer der ersten Halbbrücke und die erste Ansteuerzeitdauer der zweiten Halbbrücke innerhalb einer vorbestimmten Toleranz deckungsgleich sind.

Unter einer vorstimmten Toleranz im Rahmen des angegebenen Verfahrens soll nachstehend eine Mindestzeitdauer verstanden werden, die zur Erfassung des eingangs genannten auf einer der Zwischenkreisschienen fließenden Eingangsstroms erforderlich ist.

Dem angegebenen Verfahren liegt die Überlegung zugrunde, dass das eingangs genannte Verfahren nur dann durchgeführt werden kann, wenn der Wechselrichter derart angesteuert wird, dass innerhalb einer Periode der Pulsweitenmodulation einzelne Mittelabgriffe der Halbbrücken des Wechselrichters alleine mit einer der Zwischenkreisschienen verbunden sind. In diesem Fall fließt der Zwischenkreisstrom aus dem Zwischenkreis vollständig über diesen Mittelabgriff, weshalb der Zustand auch Phasenbestromung genannt wird.

Im Rahmen des vorliegenden Verfahrens wurde jedoch erkannt, dass innerhalb einer Periode der Pulsweitenmodulation nicht immer eine Phasenbestromung gegeben ist, im Rahmen derer sich das eingangs genannte Verfahren durchführen lässt, weil sich innerhalb der Periode der Pulsweitenmodulation immer zwei Ansteuerzeitdauern zweier mit einer Zwischenkreisschiene verbundener Halbbrückenschalter verschiedener Halbbrücken überdecken. Dies ist beispielsweise bei einer klassischen Ausgabe eines Nullvektors der Falls, bei der somit keine Möglichkeit der Strommessung mit einem Verfahren der eingangs genannten Art besteht.

Im Rahmen der vorliegenden Erfindung wird jedoch erkannt, dass es bei einer Pulsweitenmodulation nicht darauf ankommt, wo innerhalb einer Periode der Pulsweitenmodulation die einzelnen Halbbrückenschalter der Halbbrücken des Wechselrichters angesteuert werden, sondern nur wie lange. Die einzelnen Ansteuerzeitdauern können ohne weiteres innerhalb der Periode der Pulsweitenmodulation verschoben werden, ohne dass sich der erzeugte Wechselstrom ändert. Diese Erkenntnis wird im Rahmen des angegebenen Verfahrens genutzt, um eine Phasenbestromung in der oben genannten Weise innerhalb einer Periode der Pulsweitenmodulation zu erzwingen, so dass sich das eingangs genannte Verfahren zur Strommessung stets durchführen lässt.

In einer Ausführungsform des obigen Verfahrens wird die erste Ansteuerzeitdauer der ersten Halbbrücke zum Verschieben gegenüber der zweiten Ansteuerzeitdauer der ersten Halbbrücke in wenigstens zwei Teilzeitdauern aufgetrennt, die innerhalb der Periode der Pulsweitenmodulation zeitlich beabstandet zueinander angeordnet werden. Durch das Auftrennen der Ansteuerzeitdauern können die einzelnen Teilzeitdauern an verschiedene Zeitpunkte innerhalb der Periode der Pulsweitenmodulation verschoben werden, an denen eine Messung gemäß dem eingangs genannten Verfahren möglich ist. Auf diese Weise kann Anzahl der möglichen Strommessungen mit dem eingangs genannten Verfahrens innerhalb einer Periode deutlich gesteigert werden.

Die zwei Teilzeitdauern werden bezogen auf eine Symmetrie der ersten Ansteuerzeitdauer der zweiten Halbbrücke symmetrisch zueinander angeordnet. Die symmetrische Anordnung der Ansteuerzeitdauern in der Periode der Pulsweitenmodulation erlaubt es, die Strommessung mit dem eingangs genannten Verfahren vor der Symmetrie und nach der Symmetrie durchzuführen. Gemittelt über die Zeit wird jedoch der Strom direkt an der Symmetrie erfasst. Diese kann über die einzelnen Perioden der Pulsweitenmodulation an vordefinierte Stellen gelegt werden, so dass die mit dem eingangs genannten Verfahren zu messenden Phasenströme immer an derselben Stelle innerhalb der einzelnen Perioden der Pulsweitenmodulation erfasst werden. Auf diese Weise werden zeitliche Jitter, also Messfehler, die durch eine unterschiedliche zeitliche Lage der Messpunkte in den Perioden der Pulsweitenmodulation bedingt sind, gemindert oder ganz vermieden.

Das obige Verfahren umfasst den Schritt Anordnen der Symmetrie der ersten Ansteuerzeitdauer der zweiten Halbbrücke in einer Periodenmitte der Periode der Pulsweitenmodulation, so dass vor der Symmetrie und nach der Symmetrie eine gleich große Zeitdauer zur Durchführung der Strommessung mit dem eingangs genannten Verfahren zur Verfügung steht.

Weiterhin kann die erste Ansteuerzeitdauer der ersten Halbbrücke gegenüber der zweiten Ansteuerzeitdauer der ersten Halbbrücke derart verschoben werden, dass die erste Ansteuerzeitdauer der ersten Halbbrücke innerhalb der Periode der Pulsweitenmodulation einen vorstimmten zeitlichen Abstand zur ersten Ansteuerzeitdauer in der zweiten Halbbrücke aufweist. Auf diese Weise kann gesichert werden, dass nicht nur eine ausreichende Zeitdauer zur Durchführung des eingangs genannten Verfahrens zur Verfügung steht, sondern dass sich innerhalb der Zeitdauer der zu messende Strom am betreffenden Mittelabgriff auch eingeschwungen hat.

Gemäß einem weiteren Aspekt der Erfindung ist ein Verfahren zum Messen eines Phasenstroms eines mehrphasigen Wechselstroms in einem Wechselrichter mit wenigstens zwei Halbbrücken aus zwei über einen Mittelabgriff miteinander verbundenen Halbbrückenschaltern, an deren Anschlüssen gegenüber des Mittelabgriffs eine Spannung angelegt ist angegeben, wobei in jeder Halbbrücke ein erster der Halbbrückenschalter mit einer ersten Ansteuerzeitdauer der Ansteuerzeitdauern und der zweite der Halbbrückenschalter mit einer zweiten Ansteuerzeitdauer der Ansteuerzeitdauern im Rahmen einer Pulsweitenmodulation ansteuerbar ist. Das angegebene Verfahren umfasst die Schritte Festlegen von Ansteuerzeitdauern mit einem der obigen Verfahren und Erfassen des Phasenstromes am Mittelabgriff der ersten Halbbrücke basierend auf einem Eingangsstrom an einem der Anschlüsse der Halbbrückenschalter der ersten Halbbrücke gegenüber des Mittelabgriffs in einer ersten Ansteuerzeitdauer der ersten Halbbrücke, in der der erste Halbbrückenschalter gegenüber der ersten Halbbrückenschalter der anderen Halbbrücken alleine angesteuert wird.

Besonders bevorzugt wird der Phasenstrom dabei vor und nach der obigen Symmetrie symmetrisch zu dieser erfasst.

Gemäß einem weiteren Aspekt ist ein Verfahren zum Betreiben eines Wechselrichters vorgesehen, wobei die Ansteuerzeitdauern zum Ansteuern der Halbbrückenschalter gemäß dem obigen Verfahren zum Festlegen von Ansteuerzeitdauern bestimmt werden.

Gemäß einem weiteren Aspekt der Erfindung nach Anspruch 5 ist eine Vorrichtung, insbesondere Recheneinrichtung, zum Festlegen von Ansteuerzeitdauern für einen Wechselrichter mit wenigstens zwei Halbbrücken aus zwei über einen Mittelabgriff miteinander verbundenen Halbbrückenschaltern, an deren Anschlüssen gegenüber des Mittelabgriffs eine Spannung angelegt ist angegeben, wobei in jeder Halbbrücke ein erster der Halbbrückenschalter mit einer ersten Ansteuerzeitdauer der Ansteuerzeitdauern und der zweite der Halbbrückenschalter mit einer zweiten Ansteuerzeitdauer der Ansteuerzeitdauern im Rahmen einer Pulsweitenmodulation ansteuerbar ist. Dabei ist die Vorrichtung eingerichtet, die Ansteuerzeitdauern für beide Halbbrückenschalter beider Halbbrücken während einer Periode der Pulsweitenmodulation zu bestimmten, und die erste Ansteuerzeitdauer der ersten Halbbrücke gegenüber der zweiten Ansteuerzeitdauer in der ersten Halbbrücke zu verschieben, wenn innerhalb der Periode der Pulsweitenmodulation die erste Ansteuerzeitdauer der ersten Halbbrücke und die erste Ansteuerzeitdauer der zweiten Halbbrücke innerhalb einer vorbestimmten Toleranz deckungsgleich sind.

Gemäß einem weiteren Aspekt der Erfindung ist eine Vorrichtung angegeben, die eingerichtet ist, eines der obigen Verfahren durchzuführen.

In einer Weiterbildung der angegebenen Vorrichtung weist die angegebene Vorrichtung einen Speicher und einen Prozessor auf. Dabei ist das eines der angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung ist ein Computerprogramm dazu eingerichtet, alle Schritte eines der obigen Verfahren auszuführen.

Gemäß einem weiteren Aspekt der Erfindung ist auf einem Elektronischen Speichermedium ein obiges Computerprogramm gespeichert.

Gemäß einem weiteren Aspekt der Erfindung weist ein elektronisches Steuergerät ein obiges elektronisches Speichermedium auf.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Wechselrichters;
- Figur 2: eine schematische Darstellung eines Pulsweitenmodulationsverlaufs für den Wechselrichter;
- Figur 3: eine schematische Darstellung eines möglichen Tastverhältnisses in einer Periode der Pulsweitenmodulation aus Figur 2; und
- Figur 4: eine weitere schematische Darstellung eines möglichen Tastverhältnisses in einer Periode der Pulsweitenmodulation aus Figur 2.

### Beschreibung der Ausführungsformen

In den Figuren werden gleiche Elemente mit gleichen Bezugszeichen versehen und nur einmal beschrieben.

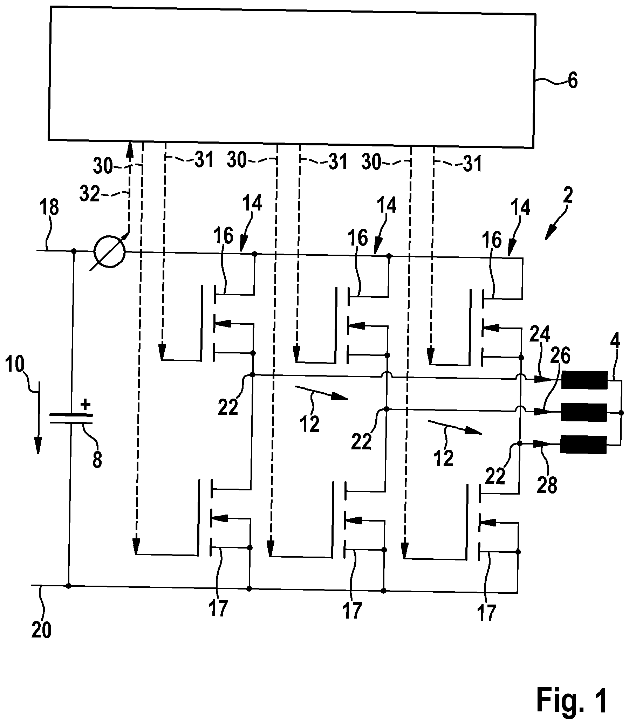

Es wird auf Figur 1 Bezug genommen, die eine schematische Darstellung eines Wechselrichters 2 zur elektrischen Energieversorgung eines dreiphasigen elektrischen Verbrauchers in Form eines Elektromotors 4 zeigt. Der Wechselrichter 6 wird dabei von einer Steuervorrichtung 6 angesteuert.

Zur elektrischen Energieversorgung des Elektromotors 4 wandelt der Wechselrichter 2 eine an einem Zwischenkreiskondensator 8 abfallende Spannung 10 in eine dreiphasige Wechselspannung, von der in Figur 1 der Übersichtlichkeit halber nur zwei Spannungsphasen 12 dargestellt sind. Die Spannung 10 kann dabei als Gleichspannung in einer dem Fachmann bekannten Weise beispielsweise durch Gleichrichten einer dreiphasigen Wechselspannung aus einem elektrischen Energieversorgungsnetz gewonnen werden. In alternativen Ausführungsformen kann die Spannung 10 auch einer Wechselspannung entsprechen.

Zum Wandeln der Spannungsphasen 12 weist der Wechselrichter 2 drei Halbbrücken 14 auf, in denen jeweils Halbbrückenschalter 16, 17 in Reihe verschaltet sind. Die Halbbrückenschalter 16, 17 sind üblicherweise als Halbleiterschalter, insbesondere als MOSFETs oder dergleichen ausgebildet. Die Halbbrücken 14 sind über eine positive Zwischenkreisschiene 18 und eine negative Zwischenkreisschiene 20 parallel zu dem Zwischenkreiskondensator 8 verbunden, so dass an den Halbbrücken 14 die Spannung 10 anliegt. Durch Betätigen der Halbbrückenschalter 16 über den Mittelabgriffen 22 der Halbbrücken 14, High-Schalter 16 genannt, kann das elektrische Potential der positiven Zwischenkreisschiene 18 auf die Mittelabgriffe 22 gelegt werden. Demgegenüber kann durch Betätigen der Halbbrückenschalter 17 unter den Mittelabgriffen 22 der Halbbrücken 14, Low-Schalter 17 genannt, das elektrische Potential der negativen Zwischenkreisschiene 20 auf die Mittelabgriffe 22 gelegt werden. Selbstverständlich sollten in einer einzigen Halbbrücke 14 niemals der High-Schalter 16 und der Low-Schalter 17 gleichzeitig betätigt werden, um einen Kurzschluss des Zwischenkreiskondensators 8 zu vermeiden.

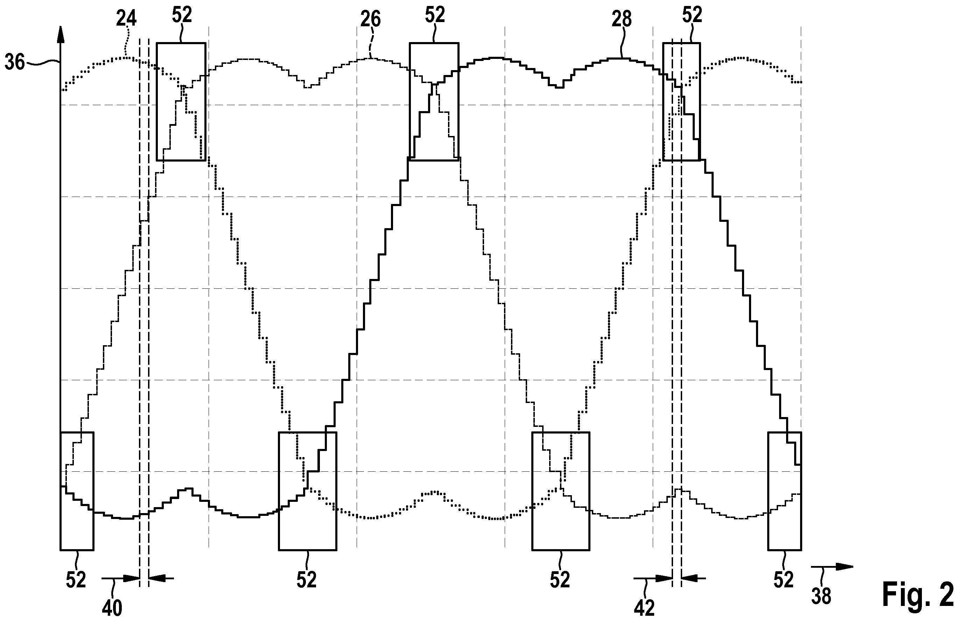

Die Halbbrückenschalter 16, 17 können beispielsweise als Stellglieder in einem Stromregelkreis genutzt werden, in dem durch den Elektromotor 4 fließende Phasenströme 24, 26, 28 mit einer dem Fachmann an sich bekannten Pulsweitenmodulation auf einen vorbestimmten Sollwert geregelt werden. Im Rahmen der Pulsweitenmodulation werden die Halbbrückenschalter 16, 17 mit entsprechenden Steuersignalen 30, 31 angesteuert, die in einer im Rahmen der Fig. 2 zu beschreibenden Weise erzeugt werden. Die Stromregelung kann dabei in beliebiger Weise ausgestaltet werden: Als Beispiel für eine Stromregelung sei auf eine Regelung im Rahmen eines dq-Systems verwiesen, wie sie in der Druckschrift DE 101 08 173 A1 beispielhaft erläutert ist.

Für die Stromregelung ist eine Erfassung von Istwerten für die Phasenströme 24, 26, 28 notwendig, wofür das in der Druckschrift DE 10 2011 003 897 A1 offenbarte Messverfahren herangezogen werden soll. Im Rahmen dieses Messverfahrens sollen nicht die Phasenströme 24, 26, 28 selbst sondern ein Eingangsstrom 32 in den Wechselrichter 2 auf einen der beiden Zwischenkreisschienen 18, 20 erfasst und daraus die einzelnen Phasenströme 24, 26, 28 berechnet werden. Das Verfahren ist in der genannten Druckschrift ausführlich beschrieben und wird hier der Kürze halber nicht weiter erwähnt.

Wie in der Druckschrift DE 10 2011 003 897 A1 offenbart, ist für eine Messung der Phasenströme 24, 26, 28 mit dem offenbarten Messverfahren eine erste Zeitdauer in der genau einer der High-Schalter 16 geschlossen und eine zweite Zeitdauer notwendig, in der genau ein Low-Schalter 17 geschlossen ist. Diese Voraussetzung in einer besonders günstigen Weise zu schaffen, ist Gegenstand der vorliegenden Ausführung.

Dies soll anhand eines konkreten Beispiels erläutert werden, im Rahmen dessen mittels der Pulsweitenmodulation die elektrischen Potentiale an den Mittelabgriffen 22 derart moduliert werden, dass die Differenzen dieser elektrischen Potentiale zueinander die Spannungsphasen 12 ergeben. Dazu müssen die Halbbrückenschalter 16, 17 im Rahmen der Pulsweitenmodulation mit Tastverhältnissen 36 über den Winkel 38 der zu erzeugenden dreiphasigen Wechselspannung angesteuert werden, die in Figur 2 dargestellt sind. Um die Zuordnung der Tastverhältnisse 36 zu den entsprechenden Halbbrücken 14 der Fig. 1 zu erleichtern, sind die entsprechenden Kurven der Figur 2 mit den Bezugszeichen der Phasenströme 24, 26, 28 versehen, die durch den Mittelabgriff 22 der Halbbrücke 14 fließen, die mit dem Tastverhältnis 36 moduliert der entsprechenden Kurve werden soll.

Die die Tastverhältnisse 36 beschreibenden Kurven sind so aufgebaut, dass die Tastverhältnisse 36 in regelmäßigen Abständen verändert und über eine bestimmte Periode 40, 42 konstant gehalten werden. Von diesen Perioden 40, 42 sind in Figur 2 der Übersichtlichkeit halber nur zwei referenziert und mit einem Bezugszeichen versehen.

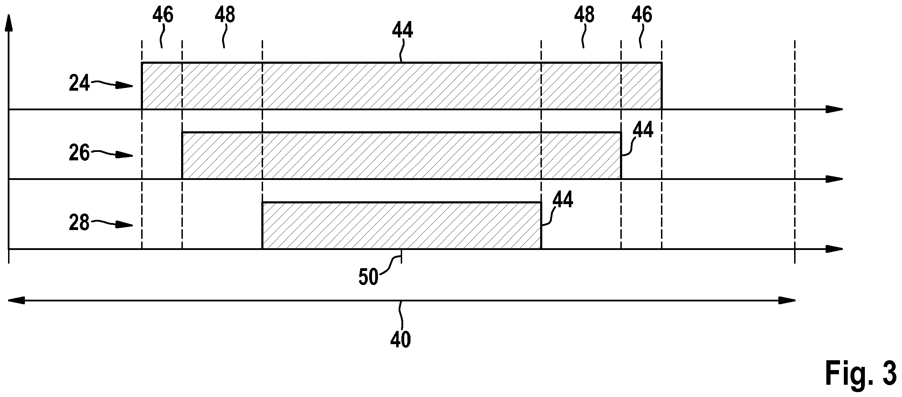

Wie nun in der DE 10 2011 003 897 A1 erläutert, kann innerhalb von jeder Periode 40, 42 der Eingangsstrom 32 in den Wechselrichter 2 an verschiedenen Zeitpunkten direkt oder indirekt einem der Strangströme 24, 26, 28 zugeordnet werden. Dazu wird auf Figur 3 Bezug genommen, in der die Einschaltzeiten 44 der High-Schalter 16 in den einzelnen Halbbrücken 14 innerhalb der Periode 40 mit schwarzen Balken dargestellt sind. Die einzelnen Balken sind der Übersichtlichkeit halber zusätzlich mit den Bezugszeichen der Strangströme 26, 28, 30 referenziert, zu denen die entsprechenden High-Schalter 16 gehören. An dieser Stelle sei zum Verständnis noch einmal darauf hingewiesen, dass wenn ein High-Schalter 16 eingeschaltet ist, der Low-Schalter 17 ausgeschaltet sein muss.

Wie in Figur 3 zu sehen, sind zu bestimmten ersten Teilzeiten 46 nur einer der High-Schalter 16 eingeschaltet, durch den damit auch nur der entsprechende Eingangsstrom 32 auf der positiven Zwischenkreisschiene 18 fließen kann. Damit kann der Eingangsstrom 32 in dieser ersten Teilzeit 46 vollständig dem entsprechenden der Phasenströme 24, 26, 28, in diesem Fall dem ersten Phasenstrom 24 zugeordnet werden. Der Übersichtlichkeit halber soll dieser Phasenstrom nachstehend als direkt gemessener Phasenstrom bezeichnet werden.

In einer zweiten Teilzeit 48 sind zwei High-Schalter 16 eingeschaltet, weshalb nur ein einziger Low-Schalter 17 eingeschaltet sein kann. Der über die beiden eingeschalteten High-Schalter 16 fließende Eingangsstrom 32 muss damit über diesen ausgeschalteten Low-Schalter 17 abfließen, weshalb der negative Wert des Eingangsstromes 32 in dieser zweiten Teilzeit 48 dem entsprechenden der Phasenströme 24, 26, 28, in diesem Fall dem dritten Phasenstrom 28 zugeordnet werden kann. Der Übersichtlichkeit halber soll dieser Phasenstrom nachstehend als indirekt gemessener Phasenstrom bezeichnet werden.

Der letzte der Phasenströme 24, 26, 28, in diesem Fall der zweite Phasenstrom 26 ergibt sich in bekannter Weise aus der Stromsumme der drei Phasenströme 24, 26, 28.

Vorzugsweise liegen die ersten und zweiten Teilzeiten 46, 48 in jeder Periode 40, 42 wie in der gezeigten Periode 40 angedeutet symmetrisch zu einem Periodenmittelpunkt 50 zueinander, weshalb in jeder Periode 40, 42 zwei Werte für den direkt gemessenen Phasenstrom und zwei Werte für den indirekt gemessenen Phasenstrom erfasst werden können, wobei sich jeweils die beiden Werte zu einem Mittelwert ausmitteln, der auf dem Periodenmittelpunkt 50 liegt. Auf diese Weise werden die einzelnen Stromwerte für die Phasenströme 24, 26, 28 in jeder der Perioden 40, 42 an einem konstanten Zeitpunkt, hier dem Periodenmittelpunkt 50 erfasst, wodurch Jitter in der Erfassung der Phasenströme 24, 26, 28 nahezu ausgelöscht werden.

In Figur 2 ist zu sehen, dass die Tastverhältnisse 36 zum Bereitstellen von zwei Phasenströmen 24, 26, 28 an entsprechenden Mittelabgriffen 22 an bestimmten Bereichen 52 der Winkel 38 nahezu identisch sind. D.h. die Einschaltzeiten 44 der High-Schalter 16 sind nahezu identisch. Dadurch wird eine eindeutige Zuordnung des Eingangsstromes 32 zu den Phasenströmen 24, 26, 28 erschwert, weil keine eindeutigen ersten Teilzeiten 46 mehr vorhanden sind.

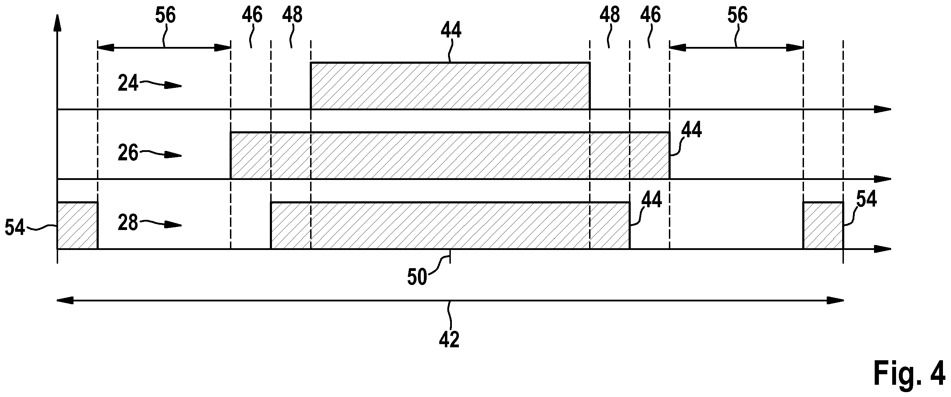

Diese können jedoch geschaffen werden, wie anhand der in Figur 4 gezeigten zweiten Periode 42 aus Figur 2 verdeutlicht werden soll. Hier wird die Einschaltzeit 44 High-Schalters 16 für den dritten Phasenstrom 28 aufgetrennt, wobei zwei abgetrennte Teile 54 dieser Einschaltzeit 44 symmetrisch um einen Zeitunterschied 56 an den Beginn und das Ende der Periode 42 geschoben werden. Auf diese Weise stehen wieder die zwei verschiedenen Teilzeiten 46, 48 zur Durchführung des im Rahmen der Figur 3 beschriebenen Verfahrens zur Verfügung.

Zwar kann das Abtrennen der Teile 54 auch mehrfach vorgenommen werden, wobei auch die abgetrennten Teile 54 in beliebiger Weise innerhalb der Periode 42 angeordnet werden können, die symmetrische Anordnung der abgetrennten Teile 54 innerhalb der Periode 42 ist jedoch aus den in Figur 3 genannten Gründen besonders bevorzugt.

Das Abtrennen der Teile 54 der Einschaltzeiten erhöht zwar die Schaltvorgänge innerhalb der Periode 42, jedoch wird dauerhaft der Einsatz der Strommessung der Phasenströme 24, 26, 28 basierend auf dem Eingangsstrom 32 gewährleistet.

## Patentansprüche

1. Verfahren zum Festlegen von Ansteuerzeitdauern (44) für einen Wechselrichter (2) mit wenigstens zwei Halbbrücken (14) aus mindestens zwei über einen Mittelabgriff (22) miteinander verbundenen Halbbrückenschaltern (16, 17), an deren Anschlüssen (18, 20) gegenüber des Mittelabgriffs (22) eine Spannung (10) angelegt ist, wobei in jeder Halbbrücke (14) ein erster (16) der Halbbrückenschalter (16, 17) mit einer ersten Ansteuerzeitdauer (44) der Ansteuerzeitdauern (44) und der zweite (17) der Halbbrückenschalter (16, 17) mit einer zweiten Ansteuerzeitdauer der Ansteuerzeitdauern (44) im Rahmen einer Pulsweitenmodulation (36) ansteuerbar ist, umfassend:
- Bestimmen der Ansteuerzeitdauern (44) für beide Halbbrückenschalter (16, 17) beider Halbbrücken (14) während einer Periode (40, 42) der Pulsweitenmodulation (36), und
- Verändern der ersten Ansteuerzeitdauer (44) der ersten Halbbrücke (14) gegenüber der zweiten Ansteuerzeitdauer in der ersten Halbbrücke (14), wenn innerhalb der Periode (40, 42) der Pulsweitenmodulation (36) die erste Ansteuerzeitdauer (44) der ersten Halbbrücke (14) und die erste Ansteuerzeitdauer (44) der zweiten Halbbrücke (14) innerhalb einer vorbestimmten Toleranz deckungsgleich sind,
**dadurch gekennzeichnet, dass** die erste Ansteuerzeitdauer (44) der ersten Halbbrücke (14) zum Verändern gegenüber der zweiten Ansteuerzeitdauer der ersten Halbbrücke (14) in wenigstens drei Teilzeitdauern (44, 54) aufgetrennt wird, die innerhalb der Periode (40, 42) der Pulsweitenmodulation (36) zeitlich beabstandet (56) zueinander angeordnet werden, wobei zwei von der ersten Ansteuerzeitdauer (44) abgetrennte Teilzeitdauern (54) bezogen auf eine Symmetrie (50) der ersten Ansteuerzeitdauer (44) der zweiten Halbbrücke (14) symmetrisch um einen Zeitunterschied (56) an den Beginn und das Ende der Periode (42) geschoben werden und wobei die Symmetrie (50) der ersten Ansteuerzeitdauer (44) der zweiten Halbbrücke in einer Periodenmitte der Periode (42) der Pulsweitenmodulation (36) angeordnet wird.

2. Verfahren nach Anspruch 1, wobei die erste Ansteuerzeitdauer (44) der ersten Halbbrücke (14) gegenüber der zweiten Ansteuerzeitdauer der ersten Halbbrücke (14) derart verschoben wird, dass die erste Ansteuerzeitdauer (44) der ersten Halbbrücke (14) innerhalb der Periode (40, 42) der Pulsweitenmodulation (36) einen vorstimmten zeitlichen Abstand (46) zur ersten Ansteuerzeitdauer (44) in der zweiten Halbbrücke (14) aufweist.

3. Verfahren zum Messen eines Phasenstroms (24, 26, 28) eines mehrphasigen Wechselstroms in einem Wechselrichter (2) mit wenigstens zwei Halbbrücken (14) aus zwei über einen Mittelabgriff (22) miteinander verbundenen Halbbrückenschaltern (16, 17), an deren Anschlüssen (18, 20) gegenüber des Mittelabgriffs (22) eine Spannung (10) angelegt ist, wobei in jeder Halbbrücke (14) ein erster (16) der Halbbrückenschalter (16, 17) mit einer ersten Ansteuerzeitdauer (44) der Ansteuerzeitdauern (44) und der zweite (17) der Halbbrückenschalter (16, 17) mit einer zweiten Ansteuerzeitdauer der Ansteuerzeitdauern (44) im Rahmen einer Pulsweitenmodulation ansteuerbar ist, umfassend:
- Festlegen von Ansteuerzeitdauern (44) mit einem Verfahren nach einem der vorstehenden Ansprüche,
- Erfassen des Phasenstromes (24, 26, 28) am Mittelabgriff (22) der ersten Halbbrücke (14) basierend auf einem Eingangsstrom (32) an einem der Anschlüsse (18, 20) der Halbbrückenschalter (16, 17) der ersten Halbbrücke (14) gegenüber des Mittelabgriffs (22) in einer ersten Ansteuerzeitdauer (44) der ersten Halbbrücke (14), in der der erste Halbbrückenschalter (16) gegenüber der ersten Halbbrückenschalter (16) der anderen Halbbrücken (14) alleine angesteuert wird.

4. Verfahren zum Betreiben eines Wechselrichters, wobei die Ansteuerzeitdauern (44) zum Ansteuern der Halbbrückenschalter (16, 17) gemäß dem Verfahren zum Festlegen von Ansteuerzeitdauern (44) nach einem der Ansprüche 1 bis 3 bestimmt werden.

5. Vorrichtung (6), insbesondere Recheneinrichtung, zum Festlegen von Ansteuerzeitdauern für einen Wechselrichter (2) mit wenigstens zwei Halbbrücken (14) aus zwei über einen Mittelabgriff (22) miteinander verbundenen Halbbrückenschaltern (16, 17), an deren Anschlüssen (18, 20) gegenüber des Mittelabgriffs (22) eine Spannung (10) angelegt ist, wobei in jeder Halbbrücke (14) ein erster (16) der Halbbrückenschalter (16, 17) mit einer ersten Ansteuerzeitdauer (44) der Ansteuerzeitdauern (44) und der zweite (17) der Halbbrückenschalter (16, 17) mit einer zweiten Ansteuerzeitdauer der Ansteuerzeitdauern (44) im Rahmen einer Pulsweitenmodulation ansteuerbar ist, wobei die Vorrichtung eingerichtet ist,
- die Ansteuerzeitdauern (44) für beide Halbbrückenschalter (16, 17) beider Halbbrücken (14) während einer Periode (40, 42) der Pulsweitenmodulation (36) zu bestimmen, und
- die erste Ansteuerzeitdauer (44) der ersten Halbbrücke (14) gegenüber der zweiten Ansteuerzeitdauer in der ersten Halbbrücke (14) zu verändern, wenn innerhalb der Periode (40, 42) der Pulsweitenmodulation (36) die erste Ansteuerzeitdauer (44) der ersten Halbbrücke (14) und die erste Ansteuerzeitdauer (44) der zweiten Halbbrücke (14) innerhalb einer vorbestimmten Toleranz deckungsgleich sind,
**dadurch gekennzeichnet, dass**
die erste Ansteuerzeitdauer (44) der ersten Halbbrücke (14) zum Verändern gegenüber der zweiten Ansteuerzeitdauer der ersten Halbbrücke (14) in wenigstens drei Teilzeitdauern (44, 54) aufgetrennt wird, die innerhalb der Periode (40, 42) der Pulsweitenmodulation (36) zeitlich beabstandet (56) zueinander angeordnet werden, wobei zwei von der ersten Ansteuerzeitdauer (44) der ersten Halbbrücke (14) abgetrennte Teilzeitdauern (54) bezogen auf eine Symmetrie (50) der ersten Ansteuerzeitdauer (44) der zweiten Halbbrücke (14) symmetrisch um einen Zeitunterschied (56) an den Beginn und das Ende der Periode (42) geschoben werden und wobei die Symmetrie (50) der ersten Ansteuerzeitdauer (44) der zweiten Halbbrücke in einer Periodenmitte der Periode (42) der Pulsweitenmodulation (36) angeordnet wird.

6. Computerprogramm, welches bei Ausführung auf einer Recheneinrichtung nach Anspruch 5 alle Schritte eines Verfahrens nach einem der Ansprüche 1 bis 4 ausführt.

7. Elektronisches Speichermedium, auf welchem ein Computerprogramm nach Anspruch 6 gespeichert ist.

8. Elektronische Steuergerät (6), welches ein elektronisches Speichermedium nach Anspruch 7 aufweist.

## Claims

1. Method for defining actuation time periods (44) for an inverter (2) having at least two half-bridges (14) comprising at least two half-bridge switches (16, 17) which are connected to one another by means of a centre tap (22) and the connections (18, 20) of which have a voltage (10) applied to them in relation to the centre tap (22), wherein, in each half-bridge (14), a first (16) of the half-bridge switches (16, 17) can be actuated with a first actuation time period (44) of the actuation time periods (44) and the second (17) of the half-bridge switches (16, 17) can be actuated with a second actuation time period of the actuation time periods (44) as part of a pulse-width modulation (36), comprising:
- determining the actuation time periods (44) for the two half-bridge switches (16, 17) of the two half-bridges (14) during one period (40, 42) of the pulse-width modulation (36), and
- changing the first actuation time period (44) of the first half-bridge (14) in relation to the second actuation time period in the first half-bridge (14) when, within the period (40, 42) of the pulse-width modulation (36), the first actuation time period (44) of the first half-bridge (14) and the first actuation time period (44) of the second half-bridge (14) are congruent within a predetermined tolerance,
**characterized in that** the first actuation time period (44) of the first half-bridge (14) for changing in relation to the second actuation time period of the first half-bridge (14) is divided into at least three partial time periods (44, 54) which are arranged at time intervals (56) in relation to one another within the period (40, 42) of the pulse-width modulation (36), wherein two partial time periods (54) which are separated from the first actuation time period (44) are shifted symmetrically in relation to a symmetry (50) of the first actuation time period (44) of the second half-bridge (14) by a time difference (56) at the beginning and the end of the period (42), and wherein the symmetry (50) of the first actuation time period (44) of the second half-bridge is arranged in a period centre of the period (42) of the pulse-width modulation (36).

2. Method according to Claim 1, wherein the first actuation time period (44) of the first half-bridge (14) is shifted in relation to the second actuation time period of the first half-bridge (14) in such a way that the first actuation time period (44) of the first half-bridge (14) is at a predetermined time interval (46) in relation to the first actuation time period (44) in the second half-bridge (14) within the period (40, 42) of the pulse-width modulation (36).

3. Method for measuring a phase current (24, 26, 28) of a polyphase alternating current in an inverter (2) with at least two half-bridges (14) comprising two half-bridge switches (16, 17) which are connected to one another by means of a centre tap (22) and the connections (18, 20) of which have a voltage (10) applied to them in relation to the centre tap (22), wherein, in each half-bridge (14), a first (16) of the half-bridge switches (16, 17) can be actuated with a first time period (44) of the actuation time periods (44) and the second (17) of the half-bridge switches (16, 17) can be actuated with a second actuation time period of the actuation time periods (44) as part of a pulse-width modulation, comprising:
- defining actuation time periods (44) using a method according to one of the preceding claims,
- detecting the phase current (24, 26, 28) at the centre tap (22) of the first half-bridge (14) based on an input current (32) to one of the connections (18, 20) of the half-bridge switches (16, 17) of the first half-bridge (14) in relation to the centre tap (22) in a first actuation time period (44) of the first half-bridge (14) in which the first half-bridge switch (16) is actuated in relation to the first half-bridge switch (16) of the other half-bridges (14) alone.

4. Method for operating an inverter, wherein the actuation time periods (44) for actuating the half-bridge switches (16, 17) are determined in accordance with the method for defining actuation time periods (44) according to one of Claims 1 to 3.

5. Apparatus (6), in particular computer device, for defining actuation time periods for an inverter (2) having at least two half-bridges (14) comprising two half-bridge switches (16, 17) which are connected to one another by means of a centre tap (22) and the connections (18, 20) of which have a voltage (10) applied to them in relation to the centre tap (22), wherein, in each half-bridge (14), a first (16) of the half-bridge switches (16, 17) can be actuated with a first actuation time period (44) of the actuation time periods (44) and the second (17) of the half-bridge switches (16, 17) can be actuated with a second actuation time period of the actuation time periods (44) as part of a pulse-width modulation, wherein the apparatus is designed
- to determine the actuation time periods (44) for the two half-bridge switches (16, 17) of the two half-bridges (14) during one period (40, 42) of the pulse-width modulation (36), and
- to change the first actuation time period (44) of the first half-bridge (14) in relation to the second actuation time period in the first half-bridge (14) when, within the period (40, 42) of the pulse-width modulation (36), the first actuation time period (44) of the first half-bridge (14) and the first actuation time period (44) of the second half-bridge (14) are congruent within a predetermined tolerance,
**characterized in that**
the first actuation time period (44) of the first half-bridge (14) for changing in relation to the second actuation time period of the first half-bridge (14) is divided into at least three partial time periods (44, 54) which are arranged with at time intervals (56) in relation to one another within the period (40, 42) of the pulse-width modulation (36), wherein two partial time periods (54) which are separated from the first actuation time period (44) of the first half-bridge (14) are shifted symmetrically in relation to a symmetry (50) of the first actuation time period (44) of the second half-bridge (14) by a time difference (56) at the beginning and the end of the period (42), and wherein the symmetry (50) of the first actuation time period (44) of the second half-bridge is arranged in a period centre of the period (42) of the pulse-width modulation (36).

6. Computer program which, when run on a computer device according to Claim 5, executes all of the steps of a method according to one of Claims 1 to 4.

7. Electronic storage medium on which a computer program according to Claim 6 is stored.

8. Electronic controller (6) which has an electronic storage medium according to Claim 7.

## Revendications

1. Procédé pour fixer des durées d'excitation (44) pour un onduleur (2) avec au moins deux demi-ponts (14) composés d'au moins deux commutateurs de demi-pont (16, 17) reliés ensemble par une prise centrale (22), aux connexions (18, 20) desquels, à l'opposé de la prise centrale (22), une tension (10) est appliquée, dans lequel, dans chaque demi-pont (14) un premier (16) des commutateurs de demi-pont (16, 17) peut être excité avec une première durée d'excitation (44) des durées d'excitation (44) et le deuxième (17) des commutateurs de demi-pont (16, 17) peut être excité avec une deuxième durée d'excitation des durées d'excitation (44) dans le cadre d'une modulation de largeur d'impulsion (36), comprenant les étapes consistant à :
déterminer les durées d'excitation (44) pour les deux commutateurs de demi-pont (16, 17) des deux demi-ponts (14) pendant une période (40, 42) de la modulation de largeur d'impulsion (36), et
modifier la première durée d'excitation (44) du premier demi-pont (14) par rapport à la deuxième durée d'excitation dans le premier demi-pont (14) quand à l'intérieur de la période (40, 42) de la modulation de largeur d'impulsion (36), la première durée d'excitation (44) du premier demi-pont (14) et la première durée d'excitation (44) du deuxième demi-pont (14) coïncident à l'intérieur d'une tolérance prédéterminée,
**caractérisé en ce que** la première durée d'excitation (44) du premier demi-pont (14) est divisée en au moins trois durées de temps partielles (44, 54) en vue d'une modification par rapport à la deuxième durée d'excitation du premier demi-pont (14), qui sont disposées à l'intérieur de la période (40, 42) de la modulation de largeur d'impulsion (36) de manière espacée dans le temps (56) les unes par rapport aux autres, dans lequel deux des durées de temps partielles (54) séparées de la première durée d'excitation (44) sont décalées de manière symétrique vers le début et la fin de la période (42) d'une différence de temps (56), par rapport à une symétrie (50) de la première durée d'excitation (44) du deuxième demi-pont (14), et dans lequel la symétrie (50) de la première durée d'excitation (44) du deuxième demi-pont est disposée dans un centre de période de la période (42) de la modulation de largeur d'impulsion (36).

2. Procédé selon la revendication 1, dans lequel la première durée d'excitation (44) du premier demi-pont (14) est décalée par rapport à la deuxième durée d'excitation du premier demi-pont (14) de telle sorte que la première durée d'excitation (44) du premier demi-pont (14) présente à l'intérieur de la période (40, 42) de la modulation de largeur d'impulsion (36) une distance temporelle prédéterminée (46) par rapport à la première durée d'excitation (44) dans le deuxième demi-pont (14).

3. Procédé de mesure d'un courant de phase (24, 26, 28) d'un courant alternatif polyphasé dans un onduleur (2) avec au moins deux demi-ponts (14) composés de deux commutateurs de demi-pont (16, 17), reliés ensemble par une prise centrale (22), aux connexions (18, 20) desquels, à l'opposé de la prise centrale (22), une tension (10) est appliquée, dans lequel, dans chaque demi-pont (14), un premier (16) des commutateurs de demi-pont (16, 17) peut être excité avec une première durée d'excitation (44) des durées d'excitation (44) et le deuxième (17) des commutateurs de demi-pont (16, 17) peut être excité avec une deuxième durée d'excitation des durées d'excitation (44) dans le cadre d'une modulation de largeur d'impulsion, comprenant les étapes consistant à :
- fixer des durées d'excitation (44) avec un procédé selon l'une quelconque des revendications précédentes,
- détecter le courant de phase (24, 26, 28) à la prise centrale (22) du premier demi-pont (14) sur la base d'un courant d'entrée (32) à l'une des connexions (18, 20) des commutateurs de demi-pont (16, 17) du premier demi-pont (14) à l'opposé de la prise centrale (22) dans une première durée d'excitation (44) du premier demi-pont (14) dans laquelle le premier commutateur de demi-pont (16) est excité seul par rapport au premier commutateur de demi-pont (16) des autres demi-ponts (14).

4. Procédé d'exploitation d'un onduleur, dans lequel les durées d'excitation (44) pour exciter les commutateurs de demi-pont (16, 17) sont déterminées selon le procédé pour fixer des durées d'excitation (44) selon l'une quelconque des revendications 1 à 3.

5. Dispositif (6), en particulier dispositif de calcul, pour fixer des durées d'excitation pour un onduleur (2) avec au moins deux demi-ponts (14) composés de deux commutateurs de demi-pont (16, 17), reliés ensemble par une prise centrale (22), aux connexions (18, 20) desquels, à l'opposé de la prise centrale (22), une tension (10) est appliquée, dans lequel dans chaque demi-pont (14), un premier (16) des commutateurs de demi-pont (16, 17) est excité avec une première durée d'excitation (44) des durées d'excitation (44) et le deuxième (17) des commutateurs de demi-pont (16, 17) est excité avec une deuxième durée d'excitation des durées d'excitation (44) dans le cadre d'une modulation de largeur d'impulsion, le dispositif étant agencé pour
déterminer les durées d'excitation (44) pour les deux commutateurs de demi-pont (16, 17) des deux demi-ponts (14) pendant une période (40, 42) de la modulation de largeur d'impulsion (36), et
modifier la première durée d'excitation (44) du premier demi-pont (14) par rapport à la deuxième durée d'excitation dans le premier demi-pont (14) quand à l'intérieur de la période (40, 42) de la modulation de largeur d'impulsion (36), la première durée d'excitation (44) du premier demi-pont (14) et la première durée d'excitation (44) du deuxième demi-pont (14) coïncident à l'intérieur d'une tolérance prédéterminée,
**caractérisé en ce que** la première durée d'excitation (44) du premier demi-pont (14) est divisée en au moins trois durées de temps partielles (44, 54), en vue d'une modification par rapport à la deuxième durée d'excitation du premier demi-pont (14), qui sont disposées à l'intérieur de la période (40, 42) de la modulation de largeur d'impulsion (36) de manière espacée dans le temps (56) les unes par rapport aux autres, dans lequel deux des durées de temps partielles (54) séparées de la première durée d'excitation (44) du premier demi-pont (14) sont décalées de manière symétrique vers le début et la fin de la période (42) d'une différence de temps (56), par rapport à une symétrie (50) de la première durée d'excitation (44) du deuxième demi-pont (14), et dans lequel la symétrie (50) de la première durée d'excitation (44) du deuxième demi-pont est disposée dans un centre de période de la période (42) de la modulation de largeur d'impulsion (36) .

6. Programme informatique qui, lorsqu'il est exécuté sur un dispositif de calcul selon la revendication 5, exécute toutes les étapes d'un procédé selon l'une quelconque des revendications 1 à 4.

7. Support de stockage électronique sur lequel est stocké un programme informatique selon la revendication 6.

8. Unité de commande électronique (6) présentant un support de stockage électronique selon la revendication 7.
